# EUROPÄISCHE PATENTANMELDUNG

(11) **EP 4 321 475 A1**
(43) Veröffentlichungstag der Anmeldung: **14.02.2024**
(21) Anmeldenummer: 22020378.0
(22) Anmeldetag: 08.08.2022
(51) Int. Cl.: C01B 3/04, C01B 3/50, C01B 3/56, H01M 8/0606, H01M 8/0662

(54) **VERFAHREN UND ANLAGE ZUR GEWINNUNG EINES WASSERSTOFFHALTIGEN PRODUKTS UNTER VERWENDUNG VON AMMONIAK**

(71) Anmelder: Linde GmbH, 82049 Pullach (DE)
(72) Erfinder: Reinke, Michael, 82049 Pullach (DE); Peschel, Andreas, 82049 Pullach (DE)
(74) Vertreter: Fischer, Werner

(57) **Zusammenfassung**

Ein Verfahren zur Gewinnung eines Wasserstoffprodukts (7) unter Verwendung von Ammoniak (1) wird vorgeschlagen, das umfasst, dass der Ammoniak (1) in einer Reaktionseinheit (120) unter Zufuhr von zumindest teilweise elektrisch erzeugter Wärme und unter Erhalt eines Wasserstoff, Stickstoff und Restammoniak enthaltenden Spaltgases (3) katalytisch umgesetzt wird, wobei unter Verwendung des Spaltgases (3) oder eines Teils hiervon in einem oder mehreren Aufbereitungsschritten (130, 140) ein Folgegemisch (6, 8) gebildet wird, und wobei das Folgegemisch (6, 8) oder ein Teil hiervon einer elektrischen Strom produzierenden oder verbrauchenden elektrochemischen Einheit (150, 160) zugeführt und in dieser elektrochemisch bearbeitet wird. Eine entsprechende Anlage (100, 200) ist ebenfalls Gegenstand der vorliegenden Erfindung.

## Beschreibung

Die vorliegende Erfindung betrifft ein Verfahren und eine Anlage zur Gewinnung eines wasserstoffhaltigen Produkts unter Verwendung von Ammoniak.

### Hintergrund

Ammoniak kann gemäß 2 NH₃ → N₂ + 3 H₂ katalytisch zu Stickstoff und Wasserstoff zerlegt (gecrackt, reformiert) werden. Die Reaktion ist endotherm und wird durch niedrigen Druck und hohe Temperatur begünstigt. Um einen Wasserstoffverdichter zu vermeiden, sind dennoch höhere Drücke wünschenswert.

Die Hauptreaktionsprodukte Wasserstoff und Stickstoff können dabei in einem Gemisch als Produkt bereitgestellt werden, oder es kann eine Aufreinigung des Wasserstoffs erfolgen. In beiden Fällen, die Ausgestaltungen der Erfindung entsprechen können, wird also ein wasserstoffhaltiges Produkt bereitgestellt. Nachfolgend wird lediglich aus Gründen der Übersichtlichkeit überwiegend auf ein (im Wesentlichen reines) Wasserstoffprodukt Bezug genommen.

Aus der Patent- und Nichtpatentliteratur sind hierfür unterschiedliche Verfahrenskonzepte und Reaktoren beschrieben. Daher kann hier zu weiteren Details auf entsprechende Literatur verwiesen werden, statt vieler beispielsweise auf D. Sima et al., Int. J. Hydrogen Energy 45 (2020) 9342-9352.

Entsprechende Verfahrenskonzepte können eine Reaktionseinheit (auch als Ammoniakcracker bezeichnet) nach Art eines Reformierreaktors umfassen, der eine Druckwechseladsorption zur Wasserstoffreinigung zugeordnet ist. Beispielsweise sei in diesem Zusammenhang auf die europäischen Patentanmeldungen 21020333.7 und 21020334.5 verwiesen, deren Inhalt hier in vollem Umfang aufgenommen wird.

Die vorliegende Erfindung stellt sich die Aufgabe, entsprechende Verfahren und Anlagen zur Gewinnung eines Wasserstoffprodukts unter Verwendung von Ammoniak zu verbessern und insbesondere effizienter zu gestalten.

### Offenbarung der Erfindung

Vor diesem Hintergrund schlägt die vorliegende Erfindung ein Verfahren und eine Anlage zur Gewinnung eines wasserstoffhaltigen Produkts unter Verwendung von Ammoniak mit den Merkmalen der unabhängigen Patentansprüche vor. Ausgestaltungen sind jeweils Gegenstand der abhängigen Ansprüche und der nachfolgenden Beschreibung.

Wie erwähnt, kann das wasserstoffhaltige Produkt im Wesentlichen reiner Wasserstoff oder ein Gasgemisch, das im Wesentlichen aus Wasserstoff und Stickstoff besteht, sein, wobei die Angabe "im Wesentlichen" einen Gehalt von mehr als 90%, 95% oder 99% der angegebenen Komponente(n) bezeichnet.

In den eingangs erläuterten Verfahrenskonzepten kann das Restgas einer Druckwechseladsorption, falls vorhanden, zur Unterfeuerung des Ammoniakcrackers verwendet werden. Auch andere Restströme können in entsprechender Weise eingesetzt werden. Allerdings wäre eine die elektrische Beheizung eines Ammoniakcrackers wirtschaftlich vorteilhaft, da ansonsten Ammoniak und/oder Wasserstoff teurer sind als Strom, wenn man jeweils die Effizienz der Produktionskette umfassend (1) Umwandlung von Strom zu Wasserstoff durch Elektrolyse (ca. 70%), (2) Ammoniaktransport und (3) Verbrennung von Ammoniak zum Cracken (nur ca. 50% der direkt für das Cracken verwendeten Wärme) betrachtet. Die direkte Beheizung für die Crackreaktion ist dagegen eine deutlich höhere Effizienz (ca. 90 %) zu erwarten.

Bei einer elektrischen Beheizung stellt sich jedoch die Frage nach der sinnvollen wirtschaftlichen Verwertung des Restgases aus der Druckwechseladsorption.

In Ausgestaltungen der Erfindung kann das Produktgas eines Ammoniakcrackers (sogenanntes Formiergas), insbesondere nach Abtrennung von Ammoniak und Wasser, durch eine Druckwechseladsorption in ein (im Wesentlichen reines) Wasserstoffprodukt und ein Restgas (das hauptsächlich Stickstoff, aber auch Reste an Wasserstoff aufweist) getrennt werden. Dieses Restgas kann im Ammoniakcracker als Brennstoff verbrannt werden. Wenn ein elektrisch beheizter Ammoniakcracker verwendet wird, kann das Restgas jedoch kaum sinnvoll genutzt werden. Die vorliegende Erfindung stellt in diesem Zusammenhang ein vorteilhaftes Lösungskonzept zur Verfügung.

In anderen Ausgestaltungen kann aus einem Spaltgas eines Ammoniakcrackers, das neben den genannten Komponenten des Formiergases auch noch Wasser enthält, im Wesentlichen Ammoniak und Wasser abgetrennt werden. Das Produkt kann in diesem Fall ein Gemisch aus im Wesentlichen Wasserstoff und Stickstoff darstellen. Auch in einem derartigen Verfahren kann ein adsorptives Verfahren wie eine Temperaturwechseladsorption oder eine Druckwechseladsorption zum Einsatz kommen, deren Restgas aber neben Ammoniak und Wasser auch Stickstoff und Wasserstoff aufweist. Dieses kann nicht vollständig zum Eintritt des Ammoniakcrackers rezykliert werden, um den enthaltenen Ammoniak zu nutzen, da sich ansonsten Wasser im Kreislauf aufbaut. Die Verbrennung entsprechender Restgasströme ist insbesondere aufgrund ihres Ammoniakgehalts problematisch, da sich hierdurch erhöhte Stickoxidemissionen ergeben können. Die Verbrennung ist daher vergleichsweise aufwendig und daher vorteilhafterweise zu substituieren.

Generell ist eine Verbrennung immer dann aufwendig bzw. mit aufwendigen Aufreinigungsschritten zur Bearbeitung des Rauchgases verbunden, wenn ein, wie vorliegend, zu verfeuerndes Gasgemisch Anteile von Ammoniak aufweist, da hiermit eine erhöhte Bildung von Stickoxiden einhergeht.

Daher wird im Rahmen der vorliegenden Erfindung vorgeschlagen, entweder eine Brennstoffzelleneinheit oder einen elektrochemischen Verdichter zur Herstellung von elektrischer Energie und Wärme aus dem beschriebenen Restgas der Druckwechseladsorption (bzw. einem anderen wasserstoffhaltigen Gasgemisch) einzusetzen bzw. den enthaltenen Wasserstoff zu verdichten. Allgemeiner wird also ein entsprechendes Restgas (bzw. ein anderes wasserstoffhaltiges Gasgemisch) einer stromproduzierenden oder stromverbrauchenden elektrochemischen Einheit zugeführt und in dieser bearbeitet. Auf diese Weise ist eine gewinnbringende Nutzung desselben auch in einer elektrisch betrieben Anlage zur Gewinnung eines Wasserstoffprodukts unter Verwendung von Ammoniak möglich, so dass die Effizienzvorteile der elektrischen Beheizung genutzt werden.

Im Rahmen der vorliegenden Erfindung wird ein Verfahren zur Gewinnung eines wasserstoffhaltigen Produkts unter Verwendung von Ammoniak vorgeschlagen, wobei der Ammoniak in einer Reaktionseinheit unter Zufuhr von zumindest teilweise elektrisch erzeugter Wärme unter Erhalt eines Wasserstoff, Stickstoff und Restammoniak enthaltenden Spaltgases katalytisch umgesetzt wird, wobei unter Verwendung des Spaltgases oder eines Teils hiervon in einem oder mehreren Aufbereitungsschritten ein Folgegemisch gebildet wird, und wobei das Folgegemisch oder ein Teil hiervon einer elektrischen Strom produzierenden oder verbrauchenden elektrochemischen Einheit zugeführt und in dieser elektrochemisch bearbeitet wird.

Unter dem Begriff "zumindest teilweise elektrisch erzeugte Wärme" soll dabei insbesondere verstanden werden, dass thermische Energie zu weniger als 25%, 10%, 5%, 2% oder 1% durch eine Befeuerung mittels Brennern, und im Übrigen oder ausschließlich unter Verwendung elektrischer Heizmittel bereitgestellt wird. Somit ist ein weitgehender Betrieb auf Basis erneuerbarer Energien ermöglicht und Emissionen von klimarelevanten Gasen werden minimiert. Hinsichtlich der Effizienzvorteile einer elektrischen Beheizung sei auf die obigen Erläuterungen verwiesen.

In der Patent- und Nichtpatentliteratur existiert eine Reihe von Ansätzen zur Beheizung von Katalysereaktoren, beispielsweise zur Dampfreformierung, auf die auch im Rahmen der vorliegenden Anmeldung zurückgegriffen werden kann. Neben einer direkten resistiven Beheizung des Katalysators selbst oder eines Trägers, auf den dieser beispielsweise durch eine Waschbeschichtung aufgetragen ist, können dabei auch resistive Heizelemente eingesetzt werden. Auch kann eine elektrische Überhitzung des Prozessgases vorgenommen werden, das dann mit erhöhter Temperatur durch das Katalysatorbett strömt. Hierbei wird also eine adiabate Reaktionsführung implementiert. Auch mehrere entsprechender Überhitzungsschritte und sich jeweils anschließende adiabate Katalysatorbetten in Serie können vorgesehen sein.

Neben einer direkten Beheizung, bei der das Heizmittel, beispielsweise ein Heizelement, eine Heizmanschette oder ein resistiv beheizter Katalysatorträger in stofflichem Kontakt mit dem Prozessgas oder im Materialkontakt zu Reaktionsrohren, durch die das Prozessgas strömt, steht, kann auch eine indirekte elektrische Beheizung eingesetzt werden, wie unter anderem in der WO 2020/002326 A1 erläutert, aber bereits auch aus früheren Druckschriften bekannt.

Eine derartige indirekte elektrische Beheizung kann unter Verwendung von elektrischen Strahlungsheizelementen erfolgen, die zum Erhitzen auf die für die genannten Reaktionen erforderlichen hohen Temperaturen geeignet sind, wobei derartige Heizelemente derart angeordnet sind, dass diese nicht in direktem Kontakt mit den Reaktionsrohen stehen. Die Wärmeübertragung erfolgt dabei überwiegend oder ausschließlich in Form von Strahlungswärme.

Gemäß Ausgestaltungen der Erfindung ist vorgesehen, dass die elektrochemische Einheit eine Brennstoffzelle ist oder umfasst, in der bei der elektrochemischen Bearbeitung elektrischer Strom produziert werden kann.

Brennstoffzellen der vorliegend in Frage kommenden Art können insbesondere eine Protonenaustauschmembran (engl. Proton Exchange Membrane, PEM), eine oder mehrere Festoxidbrennstoffzellen (engl. Solid Oxide Electrolysis Cell, SOEC) und/oder eine oder mehrere Schmelzkarbonatbrennstoffzellen (engl. Molten Carbonate Fuel Cell, MCFC) umfassen. Hierbei handelt es sich letztlich um "in Gegenrichtung" betriebene Elektrolyseeinheiten, beispielsweise einer Festoxidelektrolysezelle (engl. Solid Oxid Electrolysis Cells, SOEC). Entsprechende Brennstoffzellen sind in der Fachliteratur beschrieben.

Die Reaktionseinheit wird, wie erwähnt, mit zumindest teilweise elektrisch erzeugter Wärme beheizt. In Ausgestaltungen der Erfindung erfolgt dies unter Verwendung von elektrischem Strom, der zumindest einen Teil des in der Brennstoffzelle gebildeten elektrischen Stroms umfassen kann. Hierdurch ergeben sich die bereits erwähnten Effizienzvorteile der Beheizung mit elektrischem Strom bei gleichzeitiger vorteilhafter Nutzung des Restgases der Druckwechseladsorption (bzw. eines anderen wasserstoffhaltigen Gasgemischs). Wie auch weiter unten erläutert, kann der elektrochemischen Einheit auch zusätzlicher Wasserstoff und/oder zusätzliches Formiergas zugeführt werden.

Ferner kann in derartigen Ausgestaltungen vorgesehen sein, dass der Ammoniak vor der Umsetzung in der Reaktionseinheit unter Verwendung von Wärme verdampft und/oder überhitzt wird, die die zumindest einen Teil der in der Brennstoffzelle gebildeten Wärme umfassen kann. Hierdurch wird eine weitere Wärmeintegration geschaffen und sowohl Wärme als auch elektrische Energie, gewonnen aus dem Restgas (bzw. einem anderen wasserstoffhaltigen Gasgemisch), können im Wesentlichen vollständig in dem Verfahren bzw. der Anlage genutzt werden.

Gemäß Ausgestaltungen der Erfindung ist die elektrochemische Einheit ein elektrochemischer (Wasserstoff-)Kompressor oder umfasst einen solchen, in dem bei der elektrochemischen Bearbeitung druckerhöhter Wasserstoff und ein stickstoffhaltiges Abgas gebildet werden kann. Hierbei handelt es sich um eine weitere Ausgestaltung, die keine Nutzung des Restgases zu Heizzwecken, sondern eine besonders vorteilhafte Nutzung des noch in dem Restgas (bzw. einem anderen wasserstoffhaltigen Gasgemisch) enthaltenen Wasserstoffs, insbesondere als Teil des gewonnenen Wasserstoffprodukts, ermöglicht.

In Ausgestaltungen der Erfindung ist auch eine Kombination aus elektrochemischem Kompressor und Brennstoffzelle möglich, wobei die Brennstoffzelle mit in dem elektrochemischen Kompressor gewonnenen und druckbeaufschlagtem Wasserstoff beschickt werden kann. Auch eine beliebige Anzahl unterschiedlicher Einheiten kann in derartigen Ausgestaltungen in unterschiedlicher Kombination verwendet werden.

Der Aufbau eines, grundsätzlich ebenfalls aus der einschlägigen Literatur bekannten, elektrochemischen Kompressor kann im Wesentlichen vergleichbar mit einer Brennstoffzelle mit Protonenaustauschmembran sein. Ein elektrochemischer Kompressor weist eine Anode, eine protonenleitende Membran als Elektrolyt, und eine Kathode auf. Anders als in der Brennstoffzelle wird im elektrochemischen Kompressor keine elektrische Arbeit produziert, sondern im Prozess verbraucht. Wenn auf der Anode befeuchteter Wasserstoff zugegeben wird, führt die angelegte Spannung zu einer Aufspaltung der Wasserstoffmoleküle in Protonen und Elektronen. Die Potentialdifferenz zwingt die Protonen durch die Membran zur Kathode, wo sie mit Elektronen zu molekularem Wasserstoff rekombinieren. Wenn der Kathodenausgang durchflussbegrenzt ist, jedoch durch die angelegte Spannung kontinuierlich weiterer Wasserstoff zur Kathode transportiert wird, steigt der Druck.

Elektrochemische Kompressoren können mehrstufig aufgebaut sein und mehrere sogenannter Membran-Elektroden-Baugruppen (engl. Membrane Electrode Assemblies, MEA) aufweisen, die durch Protonenaustauschmembranen getrennt sein können. Diese können in Reihe geschaltet werden, um höhere Drücke zu erreichen.

Ein besonderer Vorteil bei der Verwendung von elektrochemischen Kompressoren besteht darin, dass diese keine beweglichen Teile aufweisen und sehr kompakt baubar sind. Mit der elektrochemischen Verdichtung von Wasserstoff kann ein Druck von bis zu 1.000 bar erreicht werden. Der Wasserdampfpartialdruck, die Stromdichte, die Betriebstemperatur und die Wasserstoffrückdiffusion aufgrund des Druckgradienten wirken sich auf den maximal erreichbaren Druck aus.

Gemäß dieser Ausgestaltungen kann der druckerhöhte Wasserstoff oder ein Teil hiervon insbesondere bei der Bereitstellung des Wasserstoffprodukts verwendet werden. Hierdurch erhöht sich die Gesamtwasserstoffausbeute des Verfahrens.

Der eine oder die mehreren Aufbereitungsschritte kann bzw. können in Ausgestaltungen der Erfindung eine Ammoniakrückgewinnung umfassen, unter Verwendung derer ein gegenüber dem Spaltgas zumindest an Wasserstoff und Stickstoff angereichertes und zumindest an Restammoniak abgereichertes Formiergas gebildet werden kann. Eine Ammoniakrückgewinnung bzw. -abtrennung kann insbesondere die Nutzung von Protonenaustauschmembranen in der elektrochemischen Einheit ermöglichen.

Die Ammoniakrückgewinnung kann in solchen Ausgestaltungen einen Ammoniakabtrennschritt umfassen, der aus einem Auskondensieren, Ausfrieren, Adsorbieren und Absorbieren, beispielsweise mit Wasser, und Kombinationen hiervon ausgewählt sein kann. Entsprechende Abtrennschritte sind an sich bekannt und können im Rahmen der vorliegenden Erfindung beliebig genutzt werden.

Insbesondere kann bzw. können der eine oder die mehreren Aufbereitungsschritte in Ausgestaltungen der Erfindung eine Druckwechseladsorption oder eine andere Adsorption umfassen, der das Formiergas oder ein Teil hiervon zugeführt werden kann, und unter Verwendung derer das Wasserstoffprodukt und das bereits mehrfach erwähnte, und gegenüber dem Formiergas an Stickstoff angereicherte und an Wasserstoff abgereicherte Restgas als das Folgegemisch gebildet werden können. Wie vorstehend mehrfach erläutert, erlaubt die vorliegende Erfindung eine vorteilhafte Nutzung dieses Restgases auch in elektrisch beheizten Verfahren und Anlagen.

In entsprechenden Ausgestaltungen kann beispielsweise eine Druckwechseladsorption mehrere Druckwechseladsorptionsschritte umfassen und/oder sie kann mit einem oder mehreren weiteren adsorptiven oder nicht adsorptiven Trennschritten kombiniert sein. Grundsätzlich können alle Varianten einer Druckwechseladsorption bei beliebigen vorteilhaften Verfahrensdrücken eingesetzt werden, auch eine sogenannte Vakuum-Druckwechseladsorption, bei der der Desorptionsschritt auf einem unteratmosphärischen Druckniveau erfolgt. Auch eine Temperaturwechseladsorption kann grundsätzlich eingesetzt werden.

Die Druckwechseladsorption (engl. Pressure Swing Adsorption, PSA) wird allgemein zur Trennung von gasförmigen Stoffgemischen verwendet. Man nutzt hierbei die unterschiedlich starken Adsorptionskräfte der einzelnen Gasmoleküle oder Atome gegenüber dem eingesetzten Adsorbens aus.

Die Druckwechseladsorption und Varianten hiervon sowie technische Grundlagen sind umfangreich in der Fachliteratur beschrieben, beispielsweise in einem Artikel von H.-J. Bart und U. v. Gemmingen, "Adsorption", in Ullmann's Encyclopedia of Industrial Chemistry, Onlineveröffentlichung 2012, DOI: 10.1002/14356007.b03_09.pub2.

Gemäß Ausgestaltungen der Erfindung kann die Reaktionseinheit unter Verwendung eines Katalysators betrieben werden, der ein oder mehrere Materialien aufweisen kann, das oder die aus Nickel, Eisen, Ruthenium, einem anderen Metall der Platingruppe, einem Übergangsmetall, einem Carbid oder einem Nitrid hiervon, einem bimetallischen Übergangsmetall oder Kombinationen hiervon ausgewählt sein kann bzw. sein können. Hierdurch können sich die Vorteile der vorliegenden Erfindung in besonderer Weise entfalten.

In Verfahren gemäß Ausgestaltungen der Erfindung kann die Reaktionseinheit bei einer Reaktionstemperatur zwischen 400 und 1.100 °C und/oder einem Reaktionsdruck zwischen Atmosphärendruck und 70 bar Absolutdruck betrieben werden. Insbesondere kann die Reaktionstemperatur zwischen 600 bis 1.000 °C liegen und/oder der Reaktionsdruck kann zwischen 20 und 60 bar Absolutdruck liegen. Auch hierdurch ergeben sich die erfindungsgemäßen Vorteile in besonderer Weise.

Die elektrochemische Einheit kann in Ausgestaltungen der Erfindung unter Verwendung einer Polymerelektrolytmembran und/oder einer Festoxidelektrolysezelle betrieben werden. Auch Kombinationen sind möglich. Zu den jeweiligen Merkmalen und Vorteilen sei auf die obigen Erläuterungen verwiesen.

Wie erläutert, kann zumindest in einer Teilbetriebsphase der elektrochemischen Einheit auch (zusätzlicher) Wasserstoff oder (zusätzliches) Formiergas zugeführt werden. Hierbei soll der Begriff "zusätzlich" insbesondere solchen Wasserstoff bzw. solches Formiergas bezeichnen, das nicht in einer Adsorption (desselben Verfahrens oder derselben Anlage, ggf. aber eines anderen Verfahrens oder einer anderen Anlage) als Restgas auftritt, oder aber nicht einmal in der Reaktionseinheit desselben Verfahrens bzw. derselben Anlage gebildet wird. Solcher Wasserstoff oder solches Formiergas kann beispielsweise in einem Tank bereitgestellt werden. Dies kann insbesondere dann der Fall sein, wenn eine Brennstoffzelle verwendet wird. Auf diese Weise kann mehr elektrischer Strom bereitgestellt werden, wenn die entsprechenden Restgase oder andere Gasgemische aus dem Verfahren selbst nicht ausreichen. Insbesondere kann hierbei der gesamte elektrische Strom für die Beheizung bereitgestellt werden. Beim Hochfahren einer entsprechenden Anlage, bei der beispielsweise noch keine (ausreichende) Restgasmenge bereitsteht, kann auf diese Weise ein Betrieb sichergestellt werden. Eine Hochfahrphase kann also eine Teilbetriebsphase darstellen, in der (zusätzlicher) Wasserstoff oder (zusätzliches) Formiergas der elektrochemischen Einheit zugeführt werden können. Beim Hochfahren der Anlage kann ggf. ein Batteriebetrieb durchgeführt oder extern bereitgestellter Wasserstoff der Brennstoffzelle zugeführt werden, so dass diese vollständig ohne externen Stromanschluss auskommen kann. Bei einem hohen Wirkungsgrad der Brennstoffzelle und der elektrischen Heizung kann dies gegenüber einer Befeuerung vorteilhaft sein. In einer Brennstoffzelle, insbesondere einer Festoxidbrennstoffzelle, kann in Ausgestaltungen der vorliegenden Erfindung auch Ammoniak mitverstromt werden, beispielsweise um Autarkie herzustellen.

Das in einer Brennstoffzelle (bei einem Einmaldurchlauf) nicht umgesetzte Gas kann in Ausgestaltungen der Erfindung zu einem ersten Teil zum Eintritt der Brennstoffzelle rezykliert und zu einem zweiten Teil beispielsweise in einem katalytischen Reaktor mit Sauerstoff (z.B. aus Luft) verbrannt werden, um zusätzliche Wärme, beispielsweise zur Erwärmung und/oder Überhitzung des Einsatzes zur Brennstoffzelle und/oder zum Ammoniakcracker bereitzustellen.

Eine Anlage zur Gewinnung eines Wasserstoffprodukts unter Verwendung von Ammoniak ist ebenfalls Gegenstand der Erfindung, wobei die Anlage dafür eingerichtet ist, den Ammoniak in einer Reaktionseinheit unter Zufuhr von zumindest teilweise elektrisch erzeugter Wärme und unter Erhalt eines Wasserstoff, Stickstoff und Restammoniak enthaltenden Spaltgases katalytisch umzusetzen, unter Verwendung des Spaltgases oder eines Teils hiervon in einem oder mehreren Aufbereitungsschritten ein Folgegemisch zu bilden, und das Folgegemisch oder einen Teil hiervon einer elektrischen Strom produzierenden oder verbrauchenden elektrochemischen Einheit zuzuführen und in der elektrochemischen Einheit elektrochemisch zu bearbeiten.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

Entsprechendes gilt auch für eine Anlage, die gemäß einer Ausgestaltung der Erfindung dazu eingerichtet ist, ein Verfahren gemäß einer beliebigen Ausgestaltung der vorliegenden Erfindung durchzuführen.

### Kurze Beschreibung der Zeichnung

Ausführungsformen der Erfindung werden nachfolgend rein beispielhaft unter Bezugnahme auf die beigefügte Zeichnung beschrieben, wobei
Figur 1 eine Anlage gemäß einer Ausgestaltung der Erfindung veranschaulicht, und
Figur 2 eine Anlage gemäß einer Ausgestaltung der Erfindung veranschaulicht.

### Ausführungsformen der Erfindung

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

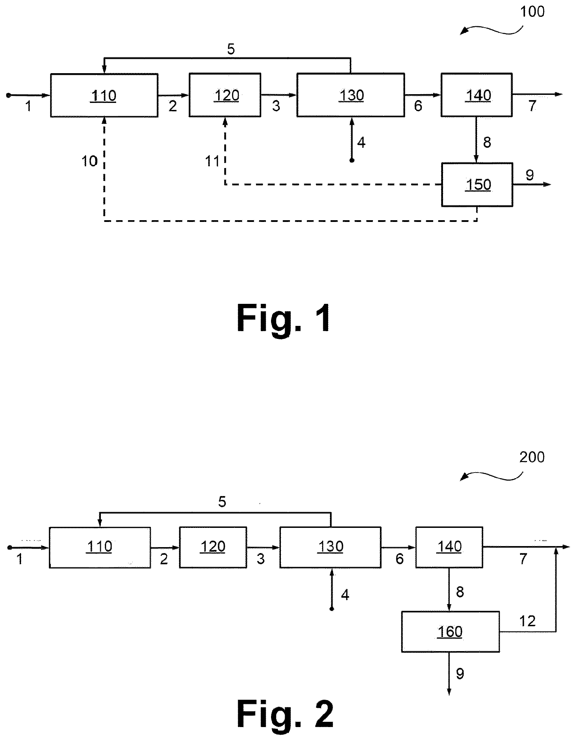

In Figur 1 ist eine Anlage gemäß einer Ausgestaltung der vorliegenden Erfindung veranschaulicht und insgesamt mit 100 bezeichnet.

Der Anlage 100 wird Ammoniak 1, beispielsweise aus einem Tank, zugeführt. Dieser wird beispielsweise mittels einer Pumpe, falls erforderlich, unter Druck gesetzt und verdampft. Der verdampfte Ammoniak wird mit einem Ammoniakkreislauf 5, der Dampf enthalten kann, gemischt und überhitzt. Verdampfung und Überhitzung sind in Form eines Blocks 110 veranschaulicht. Der überhitzte Ammoniak 2 wird in eine elektrisch beheizte Reaktionseinheit 120, auch als Ammoniakcracker oder Ammoniakreformer bezeichnet, eingespeist. Aus Reaktionseinheit 120 ausgeführtes Spaltgas 3 wird in einer Ammoniakrückgewinnungseinheit 130 gekühlt, in der auch nicht umgewandelter Ammoniak zurückgewonnen werden kann, z.B. durch eine mit Wasser 4 betriebene Wasserwäsche. Auf diese Weise erhaltenes, gekühltes Formiergas 6 wird einer Druckwechseladsorption 140 zugeführt, in der ein Wasserstoffprodukt 7 und ein Restgas 8 gebildet werden. Das Restgas wird in der in Figur 1 dargestellten Ausgestaltung einer als Brennstoffzelle ausgebildeten elektrochemischen Einheit 150 zugeführt, die Stickstoff als Abgas 9 sowie Strom 10 und Wärme 11 erzeugt. Wird nicht umgewandelter Ammoniak stromauf zurückgewonnen, kann eine Brennstoffzelle mit einer Polymerelektrolytmembran verwendet werden. Ist dies nicht der Fall, wird insbesondere eine Hochtemperaturbrennstoffzelle verwendet, die auch aus Wirkungsgradsgründen vorteilhaft sein kann. Strom 10 und Wärme 11 aus der elektrochemischen Einheit können für die Reaktionseinheit 120 bzw. die Ammoniakrückgewinnungseinheit 130 genutzt werden.

In Figur 2 ist eine Anlage gemäß einer weiteren Ausgestaltung der vorliegenden Erfindung veranschaulicht und insgesamt mit 200 bezeichnet.

Anstatt das Restgas 8 der Druckwechseladsorption 140 einer als Brennstoffzelle ausgebildeten elektrochemischen Einheit 150 zuzuführen, wie gemäß der Ausgestaltung 100 gemäß Figur 1 der Fall, ist hier vorgesehen, Wasserstoff 12 aus dem Restgas 8 der Druckwechseladsorption 140 in einer als elektrochemischer Kompressor ausgebildeten elektrochemischen Einheit 160 zurückzugewinnen, wobei im Wesentlichen Stickstoff 9 zurückbleibt. Der abgetrennte Wasserstoff 12 kann zur Bereitstellung des Wasserstoffprodukts 7 verwendet werden. Der elektrochemische Kompressor trennt Wasserstoff aus einem Gasgemisch ab und arbeitet dabei ähnlich oder vergleichbar wie eine Elektrolysezelle mit Polymerelektrolytmembran. Dabei wird die Abtrennung aus dem Gasgemisch, d.h. dem Restgas 8, und die Verdichtung des abgetrennten Gases, hier Wasserstoff 12, einer einzigen Anlage durchgeführt und ein komprimiertes und (praktisch) reines Wasserstoffprodukt erhalten.

## Patentansprüche

1. Verfahren zur Gewinnung eines Wasserstoffprodukts (7) unter Verwendung von Ammoniak (1), wobei der Ammoniak (1) in einer Reaktionseinheit (120) unter Zufuhr von zumindest teilweise elektrisch erzeugter Wärme und unter Erhalt eines Wasserstoff, Stickstoff und Restammoniak enthaltenden Spaltgases (3) katalytisch umgesetzt wird, wobei unter Verwendung des Spaltgases (3) oder eines Teils hiervon in einem oder mehreren Aufbereitungsschritten (130, 140) ein Folgegemisch (6, 8) gebildet wird, und wobei das Folgegemisch (6, 8) oder ein Teil hiervon einer elektrischen Strom produzierenden oder verbrauchenden elektrochemischen Einheit (150, 160) zugeführt und in der elektrochemischen Einheit (150, 160) elektrochemisch bearbeitet wird.

2. Verfahren nach Anspruch 1, bei dem die elektrochemische Einheit (150) eine Brennstoffzelle ist oder umfasst, in der bei der elektrochemischen Bearbeitung elektrischer Strom produziert wird.

3. Verfahren nach Anspruch 2, bei dem die zumindest teilweise elektrisch erzeugte Wärme unter Verwendung von elektrischem Strom erzeugt wird, der zumindest einen Teil des in der Brennstoffzelle gebildeten elektrischen Stroms umfasst.

4. Verfahren nach Anspruch 2 oder 3, bei dem bei der elektrochemischen Bearbeitung in der Brennstoffzelle Wärme erzeugt wird, wobei der Ammoniak vor der Umsetzung in der Reaktionseinheit (120) unter Verwendung von Wärme verdampft und/oder überhitzt wird, die die zumindest einen Teil der in der Brennstoffzelle gebildeten Wärme umfasst.

5. Verfahren nach einem der vorstehenden Ansprüche, bei dem die elektrochemische Einheit (160) ein elektrochemischer Kompressor ist oder einen solchen umfasst, in dem bei der elektrochemischen Bearbeitung druckerhöhter Wasserstoff (12) und ein stickstoffhaltiges Abgas (9) gebildet werden.

6. Verfahren nach Anspruch 5, bei dem der druckerhöhte Wasserstoff (12) oder ein Teil hiervon bei der Bereitstellung des Wasserstoffprodukts (7) verwendet wird.

7. Verfahren nach einem der Ansprüche 2 bis 6, bei dem der eine oder die mehreren Aufbereitungsschritte (130, 140) eine Ammoniakrückgewinnung (130) umfassen, unter Verwendung derer ein gegenüber dem Spaltgas (3) zumindest an Wasserstoff und Stickstoff angereichertes und zumindest an Restammoniak abgereichertes Formiergas (6) gebildet wird.

8. Verfahren nach Anspruch 7, bei dem die Ammoniakrückgewinnung (130) einen Ammoniakabtrennschritt umfasst, der aus einem Auskondensieren, Ausfrieren, Adsorbieren und Absorbieren und Kombinationen hiervon ausgewählt ist.

9. Verfahren nach Anspruch 7 oder 8, bei dem der eine oder die mehreren Aufbereitungsschritte eine Adsorption (140) umfassen, der das Formiergas (6) oder ein Teil hiervon zugeführt wird, und unter Verwendung derer das Wasserstoffprodukt (7) und ein gegenüber dem Formiergas an Stickstoff angereichertes und an Wasserstoff abgereichertes Restgas als das Folgegemisch (8) gebildet wird.

10. Verfahren nach Anspruch 9, bei dem die Adsorption (140) mehrere Druckwechseladsorptionsschritte umfasst und/oder mit einem oder mehreren weiteren Trennschritten kombiniert ist.

11. Verfahren nach einem der vorstehenden Ansprüche, bei dem die Reaktionseinheit (120) unter Verwendung eines Katalysators betrieben wird, der ein oder mehrere Materialien aufweist, das oder die aus Nickel, Eisen, Ruthenium, einem anderen Metall der Platingruppe, einem Übergangsmetall, einem Carbid oder einem Nitrid hiervon, einem bimetallischen Übergangsmetall oder Kombinationen hiervon ausgewählt ist oder sind.

12. Verfahren nach einem der vorstehenden Ansprüche, bei dem die Reaktionseinheit (120) bei einer Reaktionstemperatur zwischen 400 und 1.100 °C und/oder einem Reaktionsdruck zwischen Atmosphärendruck und 70 bar Absolutdruck betrieben wird.

13. Verfahren nach einem der vorstehenden Ansprüche, bei dem die elektrochemische Einheit (150, 160) unter Verwendung einer Polymerelektrolytmembran und/oder einer Festoxidelektrolysezelle betrieben wird.

14. Verfahren nach einem der vorstehenden Ansprüche, bei dem zumindest in einer Teilbetriebsphase der elektrochemischen Einheit (150, 160) zusätzlicher Wasserstoff und/oder zusätzliches Formiergas zugeführt wird.

15. Anlage (100, 200) zur Gewinnung eines Wasserstoffprodukts (7) unter Verwendung von Ammoniak (1), wobei die Anlage (100, 200) dafür eingerichtet ist, den Ammoniak (1) in einer Reaktionseinheit (120) unter Zufuhr von zumindest teilweise elektrisch erzeugter Wärme und unter Erhalt eines Wasserstoff, Stickstoff und Restammoniak enthaltenden Spaltgases (3) katalytisch umzusetzen, unter Verwendung des Spaltgases (3) oder eines Teils hiervon in einem oder mehreren Aufbereitungsschritten (130, 140) ein Folgegemisch (6, 8) zu bilden, und das Folgegemisch (6, 8) oder einen Teil hiervon einer elektrischen Strom produzierenden oder verbrauchenden elektrochemischen Einheit (150, 160) zuzuführen und in der elektrochemischen Einheit (150, 160) elektrochemisch zu bearbeiten.
